Europäisches Patentamt

European Patent Office

Office européen des brevets

(11) Veröffentlichungsnummer: **0 271 744 B1**

(12) **EUROPÄISCHE PATENTSCHRIFT**

(45) Veröffentlichungstag der Patentschrift: **17.06.92**

(21) Anmeldenummer: **87117244.1**

(22) Anmeldetag: **23.11.87**

(51) Int. Cl.5: **B64C 13/40**, B64C 13/50

(54) **Elektrohydrostatischer Aktuator.**

(30) Priorität: **24.11.86 DE 3640082**

(43) Veröffentlichungstag der Anmeldung:
**22.06.88 Patentblatt 88/25**

(45) Bekanntmachung des Hinweises auf die
Patenterteilung:
**17.06.92 Patentblatt 92/25**

(84) Benannte Vertragsstaaten:
**DE FR GB IT**

(56) Entgegenhaltungen:
**DE-A- 3 220 782**

**PROCEEDINGS OF THE 20TH INTERSOCIETY
ENERGY CONVERSION ENGINEERING CON-
FERENCE, Warrendale, SAE P-164, Band 1,
August 1985, Seiten 1.388-1.393; C.R. SPIT-
ZER: "A new direction in energy conversion
the all-electric aircraft"**

**Hellmuth Schultz: "Die Pumpen-
Arbeitsweise, Berechnung, Konstruktion" 14.
Auflage, Kap. II: "Verdrängerpumpen" Seiten
398-400; 1977 Springer Verlag, Berlin.**

(73) Patentinhaber: **Liebherr-Aero-Technik GmbH
Postfach 1340
W-8998 Lindenberg/Allgäu(DE)**

(72) Erfinder: **Hausy, Werner
Am Hammerbach 10
W-8999 Scheidegg(DE)**
Erfinder: **Beyer, Frieder
Grüntenweg 12
W-8998 Lindenberg(DE)**
Erfinder: **1Hofer, Hermann
Bettmauer 322
W-7972 Isny(DE)**

(74) Vertreter: **Klunker . Schmitt-Nilson . Hirsch
Winzererstrasse 106
W-8000 München 40(DE)**

## Beschreibung

Die Erfindung betrifft einen elektrohydrostatischen Aktuator für zu bewegende Flugzeugteile, zum Beispiel Höhen- und Seitenruder, gemäß Oberbegriff des Anspruchs 1.

Früher war es üblich, zu verstellende Teile eines Flugzeugs, z.B. Seiten- und Höhenruder, mit Hilfe eines zentralen Hydrauliksystems zu betätigen, von dem eine an das zu verstellende Teil gekoppelte Kolben-Zylinder-Einheit gespeist wurde. Da an sämtlichen zu bewegenden Teilen stets ein bestimmter Mindestdruck zur Verfügung stehen muß, ist die insgesamt benötigte, installierte hydraulische Leistung beträchtlich hoch. Abgesehen von der ungünstigen Energiebilanz ist ein zentrales Hydrauliksystem deshalb problematisch, weil zu jedem zu verstellenden Teil eine Zufluß- und eine Rücklaufleitung für das Hydraulikfluid vorgesehen werden muß.

Um die oben angesprochenen Probleme eines zentralen Hydrauliksystems zu vermeiden, wurde vorgeschlagen, die Hydraulik lokal zu begrenzen. Hierzu ist es in Übereinstimmung mit dem Oberbegriff des Anspruchs 1 bekanntgeworden, die Kolben-Zylinder-Einheit mit Hilfe eines Pumpen/Motors (z.B. eines Axialkolbenmotors) zu betätigen, der seinerseits von einem geregelten Elektromotor angetrieben wird. Die Regelungselektronik für den Elektromotor hat jedoch bei diesem Vorschlag bauliche Probleme aufgeworfen. Wegen der Kühlung der Leistungselektronikelemente war die gesamte Regeleinheit zu voluminös. Ein weiterer, noch gravierenderer Nachteil bestand jedoch darin, daß der den Pumpen/Motor antreibende Elektromotor ein zu schlechtes Ansprechverhalten zeigte.

Aus der DE-A-32 20 782 ist eine Einrichtung zum Optimieren des Energiehaushalts in Flugzeugbetätigungssystemen bekannt, bei der ein aus zwei Motorgeneratoren bestehendes Antriebssystem vorgesehen ist, wobei der eine Motorgenerator mit dem zu betätigenden Flugzeugteil, der andere Motorgenerator mit einer Schwungscheibe gekoppelt ist. Die Motorgeneratoren können alternativ als hydraulische Motorpumpen oder elektrische Motorgeneratoren ausgebildet sein. Zum Verstellen des Flugzeugteils wird dem mit diesem Teil gekoppelten Motorgenerator von einer Regelung ein Stellsignal zugeführt. Die Regelung regelt beide Motorgeneratoren unter Berücksichtigung der geforderten Leistung. Die Energie in dem Schwungrad kann von einer zentralen Hydraulik oder von einem mit dem Schwungrad gekoppelten Elektromotor kommen.

Der Erfindung liegt die Aufgabe zugrunde, einen Aktuator für zu bewegende Flugzeugteile zu schaffen, der bei relativ niedrigem mittleren Energieverbrauch und ausreichender Ansprechgeschwindigkeit als leichtgewichtige, kompakte Baueinheit ausgebildet werden kann.

Hierzu schafft die Erfindung einen elektrohydrostatischen Aktuator mit den Merkmalen des Anspruchs 1.

Bei dem erfindungsgemäßen Aktuator wird eine sehr hohe Ansprechgeschwindigkeit erreicht. Es ist keine aufwendige Leistungselektronik notwendig, da der die Schwungscheibe antreibende Elektromotor nicht geregelt werden muß. Zum Verstellen des Flugzeugteils wird der Gleichstrommotor angesteuert, und dementsprechend erfolgt die Verstellung des Pumpen/Motors. Insgesamt kann der Aktuator als integrierte, kompakte Baueinheit ausgebildet sein.

Mit Hilfe des Gleichstrommotors läßt sich der Pumpen/Motor sehr rasch und sehr genau so verstellen, daß er die Kolben-Zylindereinheit und somit das zu bewegende Flugzeugteil betätigt. Die hierzu kurzfristig zur Verfügung zu stellende Energie wird von dem Pumpen/Motor der Schwungscheibe entnommen. Bei dem die Schwungscheibe treibenden Elektromotor handelt es sich vorzugsweise um einen Wechselstrommotor, der relativ klein bemessen sein kann. Beim Anfahren des Systems bringt der Wechselstrommotor die Schwungscheibe nach Ablauf einer längeren Anlaufphase auf die gewünschte Nenndrehzahl von beispielsweise 12.000 UPM. Wenn zum Verstellen beispielsweise des Seitenruders dann der Schwungscheibe kinetische Energie entnommen wird, sinkt die Drehzahl der Schwungscheibe ab. Die Drehzahl des vorzugsweise starr mit der Schwungscheibe gekoppelten Wechselstrommotors nimmt zusammen mit der Drehzahl der Schwungscheibe ab. Während das zu bewegende Teil, zum Beispiel das Seitenruder, in der verstellten Position verbleibt, wird der Pumpen/Motor von dem elektrischen Gleichstrommotor so eingestellt, daß das Ruder in seiner Stellung gehalten wird. D.h.: der Pumpen/Motor gibt im Pumpenbetrieb nur diejenige Leistung ab, die zum Ausgleichen von Leckverlusten und dergleichen notwendig ist.

Während der Zeit, in der das Seitenruder verstellt ist, treibt der Wechselstrommotor die Schwungscheibe an und erhöht deren Drehzahl um einen gewissen Betrag. Wenn nun das Ruder zurückgestellt werden soll, wird der Pumpen/Motor von dem als sein Stellglied dienenden Gleichstrommotor umgesteuert, so daß er als Motor arbeitet. Die auf das Ruder einwirkende Windkraft wirkt über die Kolben-Zylindereinheit und den Hydraulikkreislauf auf den Pumpen/Motor und auf das Schwungrad ein, so daß die Drehzahl des Schwungrads erhöht wird, und zwar etwa so lange, bis das Ruder wieder seine Ausgangsposition erreicht hat. Durch die in das Schwungrad zurückgespeicherte Energie wird die Drehzahl des Schwungrads erhöht. Die erhöhte Drehzahl hängt unter anderem davon ab, wie lange das Ruder verstellt war und wie lange folglich der Wechselstrommotor zwischenzeitlich die Drehzahl des Schwungrads erhöht hat. Möglich ist beispielsweise eine vorübergehende erhöhte Drehzahl von etwa 13.000 UPM. Nach einer gewissen Zeit stabilisiert sich die Drehzahl wieder bei der Nenn-Drehzahl von 12.000 UPM.

Vorzugsweise ist der hydraulische Pumpen/Motor ein an sich bekannter Axialkolbenmotor, der von dem bürstenlosen Gleichstrommotor über ein Untersetzungsgetriebe gesteuert wird. Der bürstenlose Gleichstrommotor beziehungsweise das Untersetzungsgetriebe ist mit einem Drehwinkelgeber ausgestattet, dessen Ausgangssignal mit einem Führungssignal für den Gleichstrommotor verglichen wird, um den Gleichstrommotor mit dem Differenzsignal zu steuern. Hierdurch wird erreicht, daß der Pumpen/Motor sehr rasch verstellt wird.

Die Regelung geschieht vorzugsweise folgendermaßen:
- Ein dem gewünschten Hub der Kolben-Zylindereinheit entsprechendes Führungssignal wird zusammen mit einem die Istposition der Kolben-Zylindereinheit kennzeichnenden Rückführsignal auf einen ersten Vergleicher gegeben,
- das Ausgangssignal des ersten Vergleichers wird auf einen zweiten Vergleicher gegeben, dessen Ausgangssignal als Stellsignal für den an den Pumpen/Motor gekoppelten Gleichstrommotor dient und dessen zweiter Eingang von dem Gleichstrommotor ein Drehwinkelsignal empfängt, und
- das Drehwinkelsignal dient als Stellsignal für den Pumpen/Motor.

Die beiden Vergleicher bilden Differenzsignale aus dem jeweiligen Führungssignal und dem Rückführsignal. Die eigene Regelschleife für den Gleichstrommotor, der an den Pumpen/Motor gekoppelt ist, gewährleistet ein rasches und genaues Ansprechen der Regelung. Es empfiehlt sich, wenn in die Kolben-Zylindereinheit ein Weggeber integriert ist, der das Istpositionssignal als Rückführsignal auf den ersten Vergleicher gibt.

Durch die Erfindung wird ein Aktuator geschaffen, der aufwendige lange Hydraulikleitungen in einem Flugzeug überflüssig macht. Das Signal zum Verstellen eines Teils des Flugzeugs, zum Beispiel des Seitenruders, wird als elektrisches Signal an den ersten Vergleicher gegeben. Die Aktuatoranordnung selbst ist als dezentrales Bauteil ausgebildet und besitzt eine vom übrigen Steuerungssystem des Flugzeugs getrennte Leistungseinheit, welcher die zum Verstellen des jeweiligen Teils benötigte Energie in Form elektrischer Energie zugeführt wird. Hierbei kann es sich um eine konstante Wechselspannung halten. Das Steuersignal wird praktisch ohne Energieverlust vom Cockpit zu der Aktuator-Anordnung übertragen. Die Schwungscheibe und der sie treibende Wechselstrommotor sind unter Berücksichtigung des jeweils zu betätigendem Teils derart bemessen, daß auch im ungünstigsten Fall, also bei sehr rasch aufeinanderfolgenden Verstell-Vorgängen, die in dem Schwungrad gespeicherte Energie ausreicht, den Verstellvorgang mit der geforderten Mindest-Geschwindigkeit durchzuführen. Der Wechselstrommotor ist ein relativ schwacher Motor mit weicher Kennlinie. Beim Anfahren des Systems hat er genügend Zeit, innerhalb eines relativ langen Zeitraums die erforderliche Mindestenergie in der Schwungscheibe zu speichern. Da an jeden Verstellvorgang alsbald ein Rückstellvorgang des betreffenden Teils anschließt, mit dem eine Energie-Rückgewinnung einhergeht, steht bei einem anschließenden Verstellvorgang mit Sicherheit wieder ausreichend viel Energie in dem Schwungrad zur Verfügung.

Im folgenden wird ein Ausführungsbeispiel zu der Erfindung anhand der Zeichnung näher erläutert. Es zeigen:

Fig. 1    ein Blockschaltbild eines Regelkreises für einen Aktuator eines Flugzeugteils,

Fig. 2    eine schematisierte Skizze eines elektrohydrostatischen Aktuators für ein zu bewegendes Flugzeugteil, und

Fig. 3    eine detaillierte, teilweise gebrochene Ansicht einer Ausführungsform eines elektrohydrostatischen Aktuators.

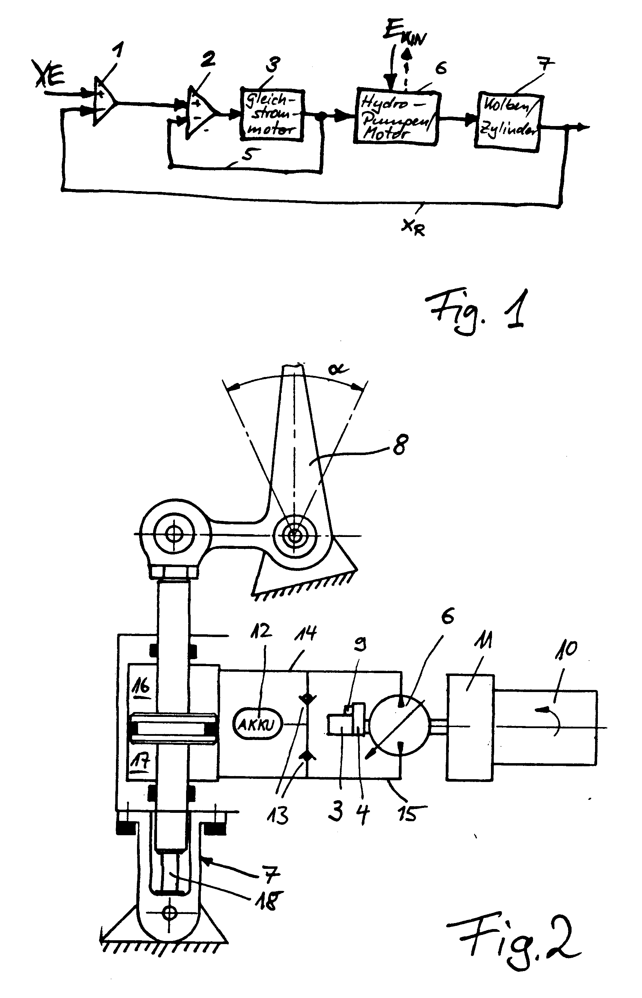

Die in Fig. 1 gezeigt Regelschleife dient dazu, eine Kolben-Zylindereinheit 7 und damit ein an diese Einheit 7 gekoppeltes, zu bewegendes Flugzeugteil in eine Soll-Position zu bringen. Ein der gewünschten oder Soll-Position entsprechendes, analoges elektrisches Führungssignal $X_E$ wird auf einen Eingang eines Vergleichers 1 gegeben, an dessen anderen Eingang als Rückführsignal ein für die Ist-Position der Kolben-Zylindereinheit 7 kennzeichnendes Signal gegeben wird. Das am Ausgang des Vergleichers 1 erscheinende Differenzsignal wird auf einen Eingang eines zweiten Vergleichers 2 gegeben. Das Ausgangssignal des Vergleichers 2 dient als Stellsignal für einen Gleichstrommotor 3. Dieser bürstenlose Gleichstrommotor 3 verstellt über ein in Fig. 1 nicht dargestelltes Untersetzungsgetriebe einen Hydro-Pumpen-Motor 6, welcher seinerseits die Kolben-Zylindereinheit 7 verstellt.

In der Kolben-Zylindereinheit befindet sich ein Weggeber, der das dem zweiten Eingang des Vergleichers 1 zugeführte Rückführsignal $X_R$ erzeugt. Der Hydro-Pumpen/Motor 6 entnimmt einem Schwungrad kinetische Energie $E_{KIN}$.

Das Ausgangssignal des Gleichstrommotors bzw. des ihm nachgeordneten Untersetzungsgetriebes wird als Drehwinkelsignal über eine Rückführleitung 5 auf den zweiten Eingang des Vergleichers 2 gegeben.

Ist das Führungssignal $X_E$ ein Rückstellsignal zum Zurückstellen des zu bewegenden Flugzeugteils in dessen Ausgangslage, so gibt der Hydro-Pumpen/Motor 6 kinetische Energie an das erwähnte Schwungrad ab.

Fig. 2 zeigt einen elektrohydrostatischen Aktuator, der dazu dient, beispielsweise ein Seitenruder 8 zu verstellen. Der Verstellbereich des Seitenruders 8 entspricht dem in Fig. 2 angedeuteten Winkel α .

An das Seitenruder 8 ist die Kolben-Zylindereinheit 7 angelenkt.

An den Hydro-Pumpen/Motor 6 ist ein Schwungsrad 11 gekoppelt, welches von einem Wechselstrommotor 10 angetrieben wird. Bei dem Wechselstrommotor 10 handelt es sich um einen relativ klein dimensionierten Motor mit weicher Kennlinie, der beim Anfahren des Systems innerhalb einer gewissen Zeitspanne das Schwungrad auf eine Nenndrehzahl von beispielsweise 12.000 UPM bringt.

An den Hydro-Pumpen/Motor 6 sind über zwei Hydraulikleitungen 14, 15 die beiden Kammern 16 und 17 der Kolben-Zylindereinheit 7 angeschlossen. Die beiden Hydraulikleitungen 14 und 15 sind über eine Druckentlastungsventilanordnung 13 gekoppelt, an welche ein Gasdruck-Akkumulator 12 angeschlossen ist, welcher das Fluid unter einem bestimmten Druck hält.

Der Hydro-Pumpen/Motor ist ein Axialkolben-Pumpen-Motor mit veränderlichem Schluckvolumen. Die Verstellung des Pumpen/Motors 6 erfolgt mit Hilfe des bürstenlosen Gleichstrommotors 3, der über ein Untersetzungsgetriebe 4 an den Pumpen/Motor gekoppelt ist. Mit dem Untersetzungsgetriebe 4 ist ein Drehwinkelgeber 9 gekoppelt, dessen Ausgangssignal die Stellung und mithin den zurückgelegten Drehwinkel des Getriebes bzw. des Motors kennzeichnet. Der Gleichstrommotor 3 arbeitet zum Beispiel mit einer Nenndrehzahl von 4.000 UPM.

Um beispielsweise das in Fig. 2 zeigt Seitenruder 8 nach rechts zu verschwenken, wird der Hydro-Pumpen/Motor so verstellt, daß die untere Hydraulikleitung 15 eine Zuflußleitung für die untere Kammer 17 der Kolben-Zylindereinheit 7 bildet, während die obere Hydraulikleitung 14 eine Rückflußleitung darstellt, welche die Kammer 16 der Kolben-Zylindereinheit 7 mit dem anderen Anschluß des Pumpen/Motors 6 verbindet. Dabei wird der Kolben der Kolben-Zylindereinheit 7 nach oben und mithin das Seitenruder 8 nach rechts bewegt.

Wenn das Seitenruder 8 zurückgestellt werden soll, wird der Hydro-Pumpen/Motor 6 durch den Gleichstrommotor 3 über das Untersetzungsgetriebe umgesteuert, so daß die untere Hydraulikleitung 15 die Rückflußleitung bildet. Durch die auf das Seitenruder 8 einwirkende Windkraft wird der Kolben (gemäß Fig. 2) nach unten gedrückt. Der über die Rückflußleitung 15 auf den Pumpen/Motor 6 einwirkende Druck bewirkt, daß der Pumpen/Motor jetzt als Motor arbeitet und kinetische Energie in das Schwungrad 11 zurückspeichert.

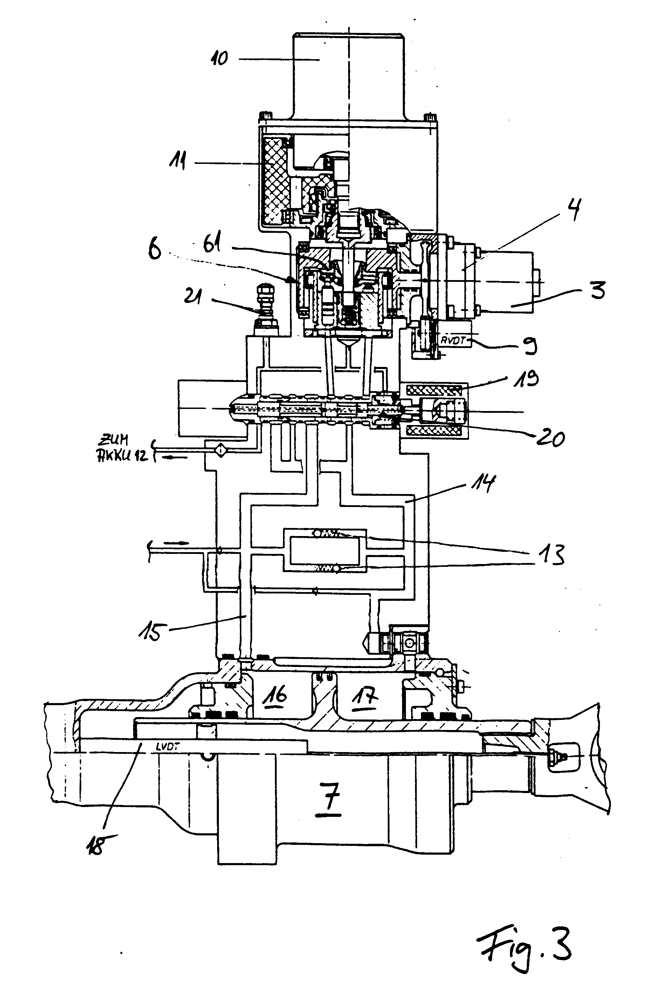

Fig. 3 zeigt den elektrohydrostatischen Aktuator gemäß Fig. 2 in weiteren Einzelheiten.

Wie insbesondere aus Fig. 3 hervorgeht, ist der Wechselstrommotor 10 starr mit der Schwungscheibe 11 gekoppelt. Der Hydro-Pumpen/Motor 6 besitzt eine Schrägscheibe 61, deren Winkellage bestimmt, ob der Pumpen/Motor als Pumpe, als Motor oder überhaupt nicht arbeitet. Wie aus Fig. 3 hervorgeht, verstellt der Gleichstrommotor 3 über das Untersetzungsgetriebe 4 die Schrägscheibe 61 und legt dadurch Strömungsrichtung und Strömungslänge des Fluid in dem Hydraulikkreis 14, 15 fest. Das Untersetzungsgetriebe 4 wirkt auf den Drehwinkelgeber 9 ein, dessen Ausgangssignal kennzeichnend für den jeweiligen Drehwinkel des Untersetzungsgetriebes und mithin des Gleichstrommotors 3 ist.

In dem Hydraulikkreis befindet sich noch ein von einem Solenoid 19 betätigtes Bypass/Dämpfungs-Ventil 20. Die Anschlüsse für den Akkumulator 12 sind angedeutet. An dem Gehäuse des Hydraulikkreises befindet sich ein Entlüftungsventil 21.

In der Kolben-Zylindereinheit 7 ist integriert ein Weggeber 18 ausgebildet, der das über die in Fig. 1 gezeigte Leitung zurückgeführte Ist-Positionssignal $X_R$ erzeugt.

Bei dem oben beschriebenen Ausführungsbeispiel sind die elektrischen Signale Analogsignale. Diese Analogsignale können zumindest teilweise durch Digitalsignale ersetzt werden. Beispielsweise können sowohl das Führungssignal $X_E$ als auch das Rückführsignal $X_R$ Digitalsignale sein. Die beiden Vergleicher 1 und 2 können digitale Bauelemente sein. Das Ausgangssignal des zweiten Vergleichers 2 wird dann mit Hilfe eines Digital/Analog-Wandlers in ein Analogsignal für den Gleichstrommotor 3 umgewandelt.

Die in Fig. 1 gezeigte Regelkreiselektronik, bestehend im wesentlichen aus den Vergleichern 1 und 2 ist bei bekannten Systemen dem Bordcomputer zugeordnet und zentral angeordnet. Die Steuerleitungen, die normalerweise unter einer Spannung von 24 V stehen und Steuerströme von 10 mA führen, haben damit eine Länge von etwa 10 bis 20 m und sind damit durch elektromagnetische Induktionen wie Blitzschlag, Einstrahlung hoher Wellenenergie etc. störanfällig. Es sind Situationen bekannt geworden, wo derartige elektromagnetische Induktionen zum Ausfall ganzer Steuersysteme und zum Absturz von Flugzeugen geführt haben.

Bei dem erfindungsgemäßen System ist zur Vermeidung derartiger Probleme vorgesehen, die Regelkreiselektronik nicht dem zentralen Bordcomputer, sondern dem Aktuator zuzuordnen und die entsprechend miniaturisierte Elektronik auch am Stellzylinder unterzubringen. Damit sind sämtliche, Signale führenden Leitungen auf das eigentliche Aktuator-System beschränkt. Der vom Bordcomputer stammende Soll-Wert wird mittels Lichtleitern zur Steuerelektronik des Aktuators übertragen.

Das Problem der Stromversorgung der Regelelektronik ist dadurch gelöst, daß an der Welle des Schwungrades ein entsprechend dimensionierter Generator angeordnet ist, der die Steuerelektronik mit dem entsprechenden Strom, versorgt.

Das als Energiespeicher wirkende Schwungrad muß im Betrieb ständig auf hoher Drehzahl gehalten werden, so daß auch der auf der Welle des Schwungrades angeordnete Generator ständig dem für die Regelkreiselektronik benötigten Strom liefert.

Die Anbringung des Generators am Schwungrad hat den weiteren Vorteil, daß die Masse des Schwungrades um die mitdrehende Masse des Generatorrotors reduziert werden kann.

Die gesamte Regelkreiselektronik kann bei Anwendung moderner Miniaturisierungs-Technologie soweit reduziert werden, so daß die Lösung einer Unterbringung der Regelkreiselektronik am Aktuator selbst auch keine einbautechnischen Probleme mit sich bringt.

In Fig. 3 ist die Anordnung des Generators auf der Welle des Schwungrades einerseits und die Befestigung der Regelkreiselektronik auf dem elektrostatischen Aktuator andererseits schematisch wiedergegeben.

In das geschlossene System führt nach außen nur eine Stromzuführung und eine optische Signalleitung für die Vorgabe des Soll-Wertes bzw. für die Rückmeldung von Status-Informationen.

Damit wird ein weitgehend autarkes System geschaffen, das insbesondere unabhängig von Störungen durch elektromagnetische Induktion ist.

**Patentansprüche**

1. Elektrohydrostatischer Aktuator für zu bewegende Flugzeugteile, zum Beispiel Höhen- und Seitenruder, mindestens bestehend aus einem Elektromotor (10), einem hydraulischen, verstellbaren Pumpen/Motor, und einer doppelwirkenden Kolben-Zylindereinheit (7), welche an das zu bewegende Flugzeugteil (8) angelenkt ist, und deren beide Kammern an die beiden Hydraulikanschlüsse (14, 15) des Pumpen/Motors (6) angeschlossen sind, dadurch **gekennzeichnet,** daß der Elektromotor (10) ein Schwungrad (11) antreibt, das an den Pumpen/Motor (6) gekoppelt ist, und daß an den Pumpen/Motor (6) als Stellglied ein elektrischer Gleichstrommotor (3) gekoppelt ist.

2. Aktuator nach Anspruch 1, dadurch gekennzeichnet, daß der die Schwungscheibe (11) treibende Elektromotor ein Wechselstrommotor (10) ist, der starr mit der Schwungscheibe gekoppelt ist.

3. Aktuator nach Anspruch 1 oder 2, dadurch gekennzeichnet, daß der hydraulische Pumpen/Motor ein Axialkolbenmotor (6) ist, daß der an ihn gekoppelte bürstenlose Gleichstrommotor (3) über ein Untersetzungsgetriebe (4) an die Schrägscheibe (61) gekoppelt ist, und daß an die Gleichstrommotor/Untersetzungsgetriebe-Anordnung ein Drehwinkelgeber gekoppelt ist.

4. Aktuator nach einem der Ansprüche 1 bis 3, **gekennzeichnet** durch folgende Regelanordnung:
   - ein dem gewünschten Hub der Kolben-Zylindereinheit entsprechendes Führungssignal ($X_E$) wird zusammen mit einem die Istposition der Kolben-Zylindereinheit kennzeichnenden Rückführsignal auf einen ersten Vergleicher (1) gegeben,
   - das Ausgangssignal des ersten Vergleichers (1) wird auf einen zweiten Vergleicher (2) gegeben, dessen Ausgangssignal als Stellsignal für den an den Pumpen/Motor (6) gekoppelten Gleichstrommotor (3) dient und dessen zweiter Eingang von dem Gleichstrommotor (3) ein Drehwinkelsignal empfängt, und
   - das Drehwinkelsignal dient als Stellsignal für den Pumpen/Motor (6).

5. Aktuator nach einem der Ansprüche 1 bis 4, dadurch **gekennzeichnet,** daß in die Kolben-Zylindereinheit (7) ein Weggeber (18) integriert ist, der ein Istpositionssignal abgibt.

6. Aktuator nach einem der Ansprüche 1 bis 5, dadurch **gekennzeichnet**, daß zwischen die Hydraulikleitungen (14, 15) zwischen Pumpen/Motor (6) und Kolben-Zylindereinheit (7) eine Druckentlastungsventilanordnung (13) und ein Akkumulator (12) geschaltet sind.

7. Aktuator nach einem oder mehreren der vorangehenden Ansprüche,

dadurch **gekennzeichnet**, daß die Regelkreiselektronik körperlich dem Aktuator zugeordnet ist und die Stromversorgung der Regelkreiselektronik durch einen Generator erfolgt, der vom Schwungrad angetrieben wird.

8. Aktuator nach Anspruch 7,
dadurch **gekennzeichnet**, daß der Rotor des Generators drehfest mit dem Schwungrad verbunden ist und die Masse des Schwungrades und die Masse des Rotors zusammen die kinetische Energie speichern.

9. Aktuator nach Anspruch 7 oder 8,
dadurch **gekennzeichnet**, daß der Soll-Wert für die Regelkreiselektronik optisch über eine Glasfaserleitung übertragen wird.

## Claims

1. An electrohydrostatic actuator for aircraft parts to be moved, for example elevators and vertical rudders, comprising at least an electric motor (10), a hydraulic, adjustable pump motor, and a double-action piston-cylinder unit (7) which is linked to the aircraft part (8) to be moved and whose two chambers are connected to the two hydraulic connections (14, 15) of the pump motor (6), **characterized** in that the electric motor (10) drives a flywheel (11) which is coupled to the pump motor (6), and an electric D.C. motor (3) is coupled to the pump motor (6) as an actuator.

2. The actuator of claim 1, **characterized** in that the electric motor driving the disk flywheel (11) is an A.C. motor (10) rigidly coupled with the disk flywheel.

3. The actuator of claim 1 or 2, **characterized** in that the hydraulic pump motor is an axial piston motor (6), the brushless D.C. motor (3) coupled thereto is coupled to the swash plate (61) via a step-down gear unit (4), and a rotary angle transmitter is coupled to the D.C. motor/step-down gear unit assembly.

4. The actuator of any of claims 1 to 3, **characterized** by the following control assembly:
    a command signal ($X_E$) corresponding to the desired stroke of the piston-cylinder unit is fed to a first comparator (1) together with a feedback signal characterizing the actual position of the piston-cylinder unit,
    the output signal of the first comparator (1) is fed to a second comparator (2) whose output signal serves as a control signal for the D.C. motor (3) coupled with the pump motor (6) and whose second input receives a rotary angle signal from the D.C. motor (3),
    the rotary angle signal serves as a control signal for the pump motor (6).

5. The actuator of any of claims 1 to 4, **characterized** in that a displacement pickup (18) which releases an actual-position signal is integrated into the piston-cylinder unit (7).

6. The actuator of any of claims 1 to 5, **characterized** in that a pressure relief valve assembly (13) and an accumulator (12) are connected between the hydraulic lines (14, 15) between the pump motor (6) and the piston-cylinder unit (7).

7. The actuator of one or more of the above claims, **characterized** in that the closed loop electronics is associated physically with the actuator, and the power supply to the closed loop electronics take places through a generator driven by the flywheel.

8. The actuator of claim 7, **characterized** in that the rotor of the generator is connected with the flywheel so as to rotate therewith, and the mass of the flywheel and the mass of the rotor store the kinetic energy together.

9. The actuator of claim 7 or 8, **characterized** in that the set point for the closed loop electronics is transmitted optically via a glass fiber line.

## Revendications

1. Organe d'actionnement électro-hydraulique pour des parties d'aéronef à déplacer, par exemple gouverne de profondeur ou de direction, comprenant au moins un moteur électrique (10), une pompe/moteur hydraulique réglable (6) et une unité piston-cylindre à double effet (7), qui est articulée à la partie d'aéronef (8) à déplacer, et dont les deux chambres sont raccordées aux deux raccords hydrauliques (14, 15) de la pompe-moteur (6), caractérisé en ce que le moteur électrique (10) entraîne un volant (11) qui est accouplé à la pompe/moteur (6) et en ce qu un moteur électrique à courant continu (6) est accouplé comme organe de réglage à la pompe/moteur (6).

2. Organe d'actionnement selon la revendication 1, caractérisé en ce que le moteur électrique entraînant le volant (11) est un moteur à courant alternatif (10) qui est rigidement accouplé au volant.

**3.** Organe d'actionnement selon la revendication 1 ou 2, caractérisé en ce que la pompe/moteur hydraulique est un moteur à pistons axiaux (6), en ce que le moteur à courant continu sans balais (3) qui lui est accouplé est accouplé par un train réducteur (4) au disque incliné (61), et en ce qu'un capteur d'angle de rotation est accouplé à l'ensemble moteur à courant continu/train réducteur.

**4.** Organe d'actionnement selon l'une des revendications 1 à 3, caractérisé par l'agencement de régulation suivant:

- un signal de référence ($X_E$) correspondant à la course souhaitée de l'unité piston-cylindre est délivré à un premier comparateur (1) en même temps qu'un signal de contre-réaction caractérisant la position instantanée de l'unité piston-cylindre;
- le signal de sortie du premier comparateur (1) est délivré à un deuxième comparateur (2) dont le signal de sortie sert de signal de réglage pour le moteur à courant continu (3) accouplé à la pompe/moteur (6) et dont la deuxième entrée reçoit du moteur à courant continu (3) un signal d'angle de rotation;
- le signal d'angle de rotation sert de signal de réglage pour la pompe/moteur (6).

**5.** Organe d'actionnement selon l'une des revendications 1 à 4, caractérisé en ce que, dans l'unité piston-cylindre (7), est intégré un capteur de course qui émet un signal de position instantanée.

**6.** Organe d'actionnement selon l'une des revendications 1 à 5, caractérisé en ce qu'entre les conduites hydrauliques (14, 15) reliant la pompe/moteur (6) et l'unité piston-cylindre (7) sont montés un agencement de valve de décharge de surpression (13) et un accumulateur (12).

**7.** Organe d'actionnement selon l'une ou plusieurs des revendications précédentes, caractérisé en ce que l'électronique du circuit de régulation fait corps avec l'organe d'actionnement tandis que l'alimentation en courant de cette électronique est assurée par un générateur qui est entraîné par le volant.

**8.** Organe d'actionnement selon la revendication 7, caractérisé en ce que le rotor du générateur est relié en rotation au volant, la masse du volant et la masse du rotor emmagasinant ensemble l'énergie cinétique.

**9.** Organe d'actionnement selon la revendication 7 ou 8, caractérisé en ce que la valeur de consigne pour l'électronique du circuit de régulation est transmise optiquement par un conducteur à fibres optiques.

Fig. 1

Fig.2

Fig. 3